# EUROPÄISCHE PATENTSCHRIFT

(11) **EP 0 652 292 B1**
(45) Veröffentlichungstag und Bekanntmachung des Hinweises auf die Patenterteilung: **21.08.1996**
(21) Anmeldenummer: 94250268.3
(22) Anmeldetag: 03.11.1994
(51) Int. Cl.: C21C 5/52, F27B 3/08, H05B 7/11

(54) **Gleichstrom-Lichtbogenofen**
Direct current electric arc furnace
Four à arc électrique à courant continu

(30) Priorität: 08.11.1993 DE 4338555
(43) Veröffentlichungstag der Anmeldung: 10.05.1995
(73) Patentinhaber: MANNESMANN Aktiengesellschaft, D-40213 Düsseldorf (DE)
(72) Erfinder: Uebber, Norbert, Dipl.-Phys., D-40764 Langenfeld (DE)
(74) Vertreter: Presting, Hans-Joachim, Dipl.-Ing.

(56) Entgegenhaltungen:
- EP-A- 0 258 101
- EP-A- 0 474 883
- EP-A- 0 519 319
- DE-A- 4 035 233
- STAHL UND EISEN., Bd.103, Nr.24, 5. Dezember 1983, DUSSELDORF DE Seiten 1258 - 1262 H.ESSMANN 'Technische und wirtschaftliche Ueberlegunngen zum Einsatz von Gleichstrom-Lichtbogenöfen'

## Beschreibung

Die Erfindung betrifft einen Gleichstrom-Lichtbogenofen zum Einschmelzen von Metall, insbesondere Schrott, mit einem durch einen Deckel verschließbaren Ofengefäß, welches aus einem mit feuerfest gekleideten Untergefäß und einem von Kühlmittel durchflossenen metallischen Obergefäß besteht, und mit einer Einrichtung zur Zuführung des elektrischen Stromes, bestehend aus einer durch den Deckel in das Ofengefäß hineinragenden Elektrode sowie einer im Boden des Untergefäßes angeordneten Bodenelektrode, wobei beide Elektroden über Zuleitungen an eine Gleichstromquelle angeschlossen sind und mindestens teilweise durch Abschirmung von der Charge magnetisch getrennt sind, und mindestens zwei Stromzuführungen zu der Bodenelektrode vorgesehen sind, die parallel zur Hauptachse geführte Leitungsstücke aufweisen.

Bei Gleichstromöfen ist die Gleichstromquelle regelmäßig auf einer Seite des Ofens angeordnet. Durch die zu den im Ofengefäß befindlichen Elektroden führenden Stromleiter wird gerade bei den hohen zum Einsatz kommenden Stromstärken infolge der magnetischen Felder eine Ablenkkraft auf den zwischen der in den Ofen hineinragenden Elektrode und der Bodenelektrode bzw. dem Schmelzbad sich befindenen Lichtbogen ausübt. Die von den Strombahnen in die Schmelze wirkenden elektro-magnetischen Kräfte rufen eine Ablenkung des Lichtbogens von der Kathode in Richtung Anode hervor, im wesentlichen von der Seite weg, von der die Stromzufuhr erfolgt.

An die Lichtbogenöfen wird die Forderung gestellt, mit maximaler Leistung den Schrott einzuschmelzen ohne dabei lokal die Verschleißrate des Ofengefäßes zu erhöhen. Bei bekannten Lichtbogenöfen wurde daher versucht, den Lichtbogen zu zentrieren.

Aus der Schrift DE 32 05 270 A1 ist ein Gleichstrom-Lichtbogenofen bekannt, bei dem die Plus- und Minusleiter gemeinsam zu einem Punkt in der Ofenkonstruktion bezogen sind, von dem die einzelnen Leiter in vorgegebener Weise oberhalb des Ofens, von dort parallel zur Ofenachse in eine Ebene unterhalb des Ofens, um endlich zur Bodenelektrode geführt zu werden. Diese Leitungsführung ist nicht nur konstruktiv aufwendig, sondern auch kostenintensiv, sie schränkt darüber hinaus die Zugängigkeit zum Ofen in einen nichterträglichen Umfang ein.

Aus der EP-A-O 474 883 ist es bekannt, bei einem Gleichstrom-Lichtbogenofen die Stromzuführung zu der Bodenelektrode des Ofens mehrfach auszuführen, so daß für diese mindestens zwei Stromzuführungen vorhanden sind. Aus der genannten Schrift ist es weiterhin bekannt, daß einzelne Leitungsstücke parallel zur Hauptachse des Ofens verlaufen.

Aus der EP 0 255 793 B1 ist ein Gleichstrom-Elektroofen zum Metallschmelzen bekannt, bei dem zum Abbau der Lichtbogen-Lichtbogen-Ablenkungswirkung eine magnetische Abschirmung am Boden des Gefäßes in der Form angeordnet ist, daß sie den eine Herdelektrode umschließenden Teil von dem Boden und mindestens ein Teil der entsprechenden Rückleitung abdeckt. Der metallische Teil des aus dieser Schrift bekannten Ofenunterteils weist eine Metallplatte mit hoher magnetischer Permeabilität auf, die bereits bei der Ofenkonstruktion zu berücksichtigen ist.

Damit die elektromagnetischen Felder, die von Strömen unterhalb des Gefäßbodens hervorgerufen werden, einen ausreichenden Einfluß auf den Lichtbogen ausüben, wird der Gefäßmantel in diesem Bereich aus teuren, nichtmagnetischem Material, in der Regel Edelstahl, bestehen.

Die Erfindung hat sich das Ziel gesetzt, mit konstruktiv einfachen Mitteln und mit wenig Wartungsaufwand variabel Einfluß auf die Brennrichtung des Lichtbogens zu nehmen.

Die Erfindung Löst das Problem mit den Merkmalen des Anspruchs 1.

Der erfindungsgemäße Gleichstrom-Lichtbogenofen weist dabei Schilde auf, die zur Abschirmung des magnetischen Feldes, welches der Strom in mindestens zwei mit der Bodenelektrode verbundenen Leitungszuführungen in Höhe des Lichtbogens hervorruft, zwischen den parallel zu der Ofenhauptachse geführten Leitungsstücken und dem Ofenobergefäß angeordnet sind. Die Schilde sind an Antriebe angeschlossen, die eine zum Gefäß parallele Verschiebung ermöglichen. Die Schilde können durch vertikales aber auch horizontales Schieben die Leitungssstücke ganz oder auch nur teilweise abschirmen und nehmen so Einfluß auf die Ablenkungshöhe und -richtung des Lichtbogens.

Diese variable Einflußnahme auf die Brennrichtung des Lichtbogens ermöglicht es, die metallischen Kühlelemente und die Feuerfestbereiche des Ofens einstellbar thermisch gleichmäßiger zu belasten und dabei gleichzeitig Schrottansammlungen im Ofengefäß gezielt mit höherer Wärmeenergie zu beaufschlagen. Hierdurch tritt eine Vergleichmäßigung des Schrottniederschmelzens ein, ohne das Auftreten von Energieverlusten durch lokal einer überhöhten Lichtbogenstrahtung ausgesetzten Kühlelementen sowie keramischer Auskleidung. Es werden nicht nur geringere Verschleißraten für die metallischen Kühlelemente sowie die Feuerfestbereiche erreicht, es wird auch ein höheres Leistungsniveau des Lichtbogenofens möglich und somit geringere tap-to-tap-Zeiten.

Darüber hinaus besteht die Möglichkeit, üblicherweise kältere Bereich des Möllers im Lichtbogenofen, hier insbesondere der Erker- und Türbereich, bevorzugt zeitlich definiert zu erwärmen.

Während beim Einsatz von statischen Kompensationselementen deren Anordnung und Auslegung kaum und ggfs. nur sehr aufwendig zu ermitteln ist - da neben der Zuleitung auch noch andere magnetische Werkstoffe der Bauteile Elektrotragvorrichtung, Erker, Tür u.ä Einfluß auf die Lichtbogenauslenkung haben -, wird dies beim erfindungsgemäßen Ofen durch einfaches Verstellen eingestellt bzw. nachgeregelt. Weiterhin können Änderungen der prozeßbedingten Zustände wie:
- ungleichmäßige Lage - und dichte Verteilung des Schrotts im Ofen
- örtlich und zeitlich variierende konvektive Einflüsse im Ofen, etwa öffnen der Tür
- Plasmasäulen beeinflussende Zustände, insbesondere die Gaszusammensetzung und die thermischen Bedingungen im Umfeld der Säule beeinflußt werden.

Die Rbschirmung ist besonders wirkungsvoll in dem Bereich des Ofengefäßes, in dem beim Einsatz von ausschließlich metallischen Kühlelementen diese aus Kupfer sind.

Ein Beispiel der Erfindung ist in der beigefügten Zeichnung dargelegt.

Es zeigen die
Figur 1 eine Seitenansicht
Figur 2 eine Draufsicht (Schnitt AA) des Lichtbogenofens.

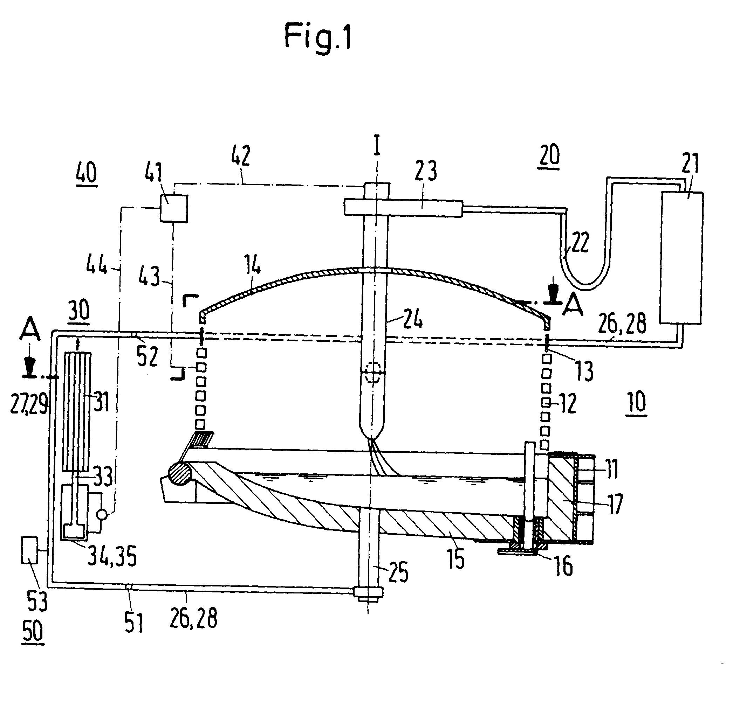

Die Figur 1 zeigt ein Lichtbogenofengefäß 10 mit einem Untergefäß 11 und einem Obergefäßteil 12 aus Kupfer und einem weiteren Obergefäßteil 13 aus Stahl, welches mit einem Deckel 14 verschließbar ist. Das Untergefäß 11 besitzt einen Erker 17 in dem eine Abstichöffnung 16 vorgesehen ist. Im Boden 15 ist eine als Anode ausgebildete Bodenelektrode 25 angeordnet.

Diese Bodenelektrode 25 ist zum einen über eine im wesentlichen horizontal geführte Leitung 26, die ein achsparallel zur Ofenhauptachse I geführtes Leitungsstück 27 und weiterhin über ein im wesentlichen horizontal geführtes Leitungsstück 28, welches ein achsparallel zur Hauptachse geführtes Leitungsstück 29 aufweist, mit einer Gleichstromquelle 21 der Stromzuführeinrichtung 20 verbindet. Die Gleichstromquelle 21 ist weiterhin über eine Zuleitung 22 mit einer an einer Tragvorrichtung 23 befestigten Elektrode 24 verbunden.

Zwischen den Leitungsstücken 27 und 29 sowie dem Oberofengefäß 12, 13 ist eine Abschirmung vorgesehen, welche vertikal schiebbare Schilde 31 oder horizontal verschiebbare Schilde 32 aufweist. Dabei ist der Schild 31 über eine Führungsstange 33 mit Mitteln zum Verschieben 34, im dargelegten Beispiel eine Kolbenzylindereinheit 35, verbunden. Der horizontal verschiebbare Schild 32 ist dabei durch einen mechanischen Abtrieb 37 mittels eines Motors M auf einer Schiene 36 verfahrbar.

Weiterhin ist eine Meß- und Regeleinrichtung 40 vorgesehen, die ein Meß- und Regelgerät 41 aufweist, welches mit Meßleitungen für den Strom 42, einer Meßleitung für die Temperatur 43 und ähnlichen Meßelementen verbunden ist.

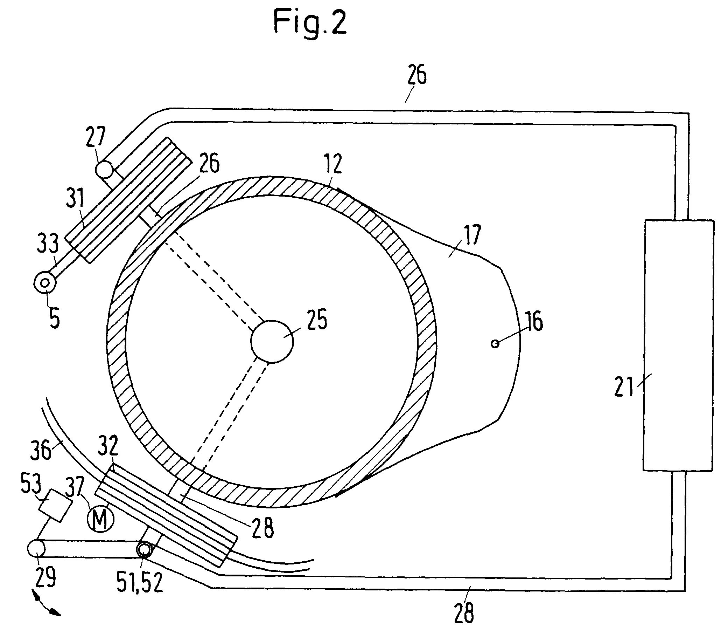

In der Figur 2 werden die identischen Positionsbezeichnungen übernommen. Am Beispiel des Leitungsstückes 29 ist eine Schwenkvorrichtung 50 dargestellt. Diese Schwenkvorrichtung weist einen Antrieb 53 aus, der mit dem vertikalen Leitungsstück 29 verbunden ist. Um das Schwenken zu ermöglichen, sind in der Zu- und Ableitung 28 Gelenke 51, 52 vorgesehen.

## Patentansprüche

1. Gleichstrom-Lichtbogenofen zum Einschmelzen von Metall, insbesondere Schrott, mit einem durch einen Deckel (14) verschließbaren Ofengefäß (10), welches aus einem mit feuerfest ausgekleideten Untergefäß (11) und einem von Kühlmittel durchflossenen metallischen Obergefäß (12, 13) besteht, und mit einer Einrichtung zur Zuführung des elektrischen Stromes, bestehend aus einer durch den Deckel (14) in das Ofengefäß (10) hineinragenden Elektrode (24) sowie einer im Boden (15) des Untergefäßes (11) angeordneten Bodenelektrode (25), wobei beide Elektroden über Zuleitungen an eine Gleichstromquelle (21) angeschlossen sind und mindestens teilweise durch Abschirmung von der Charge magnetisch getrennt sind, und mindestens zwei Stromzuführungen (26, 28) zu der Bodenelektrode (25) vorgesehen sind, die parallel zur Hauptachse (I) geführte Leitungsstücke (27, 29) aufweisen,
dadurch gekennzeichnet,
daß zwischen den Leitungsstücken (27, 29) und dem Obergefäß (12, 13) zur Schwächung des durch den Strom in Höhe des Lichtbogens hervorgerufenen magnetischen Feldes Schilde (31, 31) vorgesehen sind, die mit Hilfe von mit ihnen verbundenen Antrieben (34) parallel zum Obergefäß (12, 13) verschiebbar sind.

2. Gleichstrom-Lichtbogenofen nach Anspruch 1,
dadurch gekennzeichnet,
daß die Mittel (34) zum Verschieben der Schilde (31, 32) Kolbenzylindereinheiten (35) sind.

3. Gleichstrom-Lichtbogenofen nach Anspruch 2,
dadurch gekennzeichnet,
daß die Kolbenzylindereinheiten (35) mit einen Regeleinheit (41) in Verbindung stehen, die mit Strom (49) und/oder Temperaturmeßelementen (43) über eine Steuerleitung (44) verbunden sind.

4. Gleichstrom-Lichtbogenofen nach Anspruch 2,
dadurch gekennzeichnet,
daß die Antriebe (34) Führungsstangen (33) aufweisen, mit denen der Schild (31) achsparallel zur Elektrode (24) führbar ist.

5. Gleichstrom-Lichtbogenofen nach Anspruch 1,
dadurch gekennzeichnet,
daß die Antriebe (34) elektromechanische Antriebe (37) sind, die mit Führungsschienen (36) in Verbindung stehen, mit denen der Schild (32) horizontal verschiebbar ist.

6. Gleichstrom-Lichtbogenofen nach Anspruch 1,
dadurch gekennzeichnet,
daß das Obergefäß (12) an seiner dem Untergefäß (11) zugeneigten Mündung aus Kupfer ist.

7. Gleichstrom-Lichtbogenofen nach Anspruch 1,
dadurch gekennzeichnet,
daß die Leitungsstücke (27,29) an eine Schwenkvorrichtung (50) angeschlossen sind, mit dem sie in ihrem Abstand zueinander veränderbar sind.

8. Gleichstrom-Lichtbogenofen nach Anspruch 7,
dadurch gekennzeichnet,
daß in den Zuleitungen (26,28) zum Verschwenken der Leitungsstücke (27,28) Gelenke (51,52) vorgesehen sind.

## Claims

1. A direct-current arc furnace for smelting metal, in particular scrap, with a furnace vessel (10) which can be closed by a cover (14), which vessel consists of a refractory-lined lower vessel (11) and a metallic upper vessel (12, 13) through which coolant flows, and with a means for supplying the electric current, consisting of an electrode (24) which projects through the cover (14) into the furnace vessel (10) and a base electrode (25) arranged in the base (15) of the lower vessel (11), both electrodes being connected via feed lines to a direct-current source (21) and being magnetically separated from the charge at least in part by shielding, and at least two means (26, 28) for supplying current to the base electrode (25) being provided, which have parts (27, 29) of lines which are guided parallel to the main axis (I),
characterised in that
shields (31, 32) are provided between the line parts (27, 29) and the upper vessel (12, 13) in order to weaken the magnetic field produced by the current at the level of the arc, which shields can be displaced parallel to the upper vessel (12, 13) with the aid of drives (34) which are connected thereto.

2. A direct-current arc furnace according to Claim 1,
characterised in that the means (34) for displacing the shields (31, 32) are piston-cylinder units (35).

3. A direct-current arc furnace according to Claim 2,
characterised in that the piston-cylinder units (35) are connected to a control unit (41) which are connected to current-(42) and/or temperature-measuring elements (43) via a control line (44) [sic].

4. A direct-current arc furnace according to Claim 2,
characterised in that the drives (34) have guide rods (33) by means of which the shield (31) can be guided paraxially to the electrode (24).

5. A direct-current arc furnace according to Claim 1,
characterised in that the drives (34) are electromechanical drives (37) which are connected to guide rails (36) by means of which the shield (32) can be displaced horizontally.

6. A direct-current arc furnace according to Claim 1,
characterised in that the upper vessel (12) is made of copper at its mouth which is inclined towards the lower vessel (11).

7. A direct-current arc furnace according to Claim 1,
characterised in that the line parts (27, 29) are connected to a pivoting means (50) by means of which their distance relative to each other can be changed.

8. A direct-current arc furnace according to Claim 7,
characterised in that articulations (51, 52) are provided in the feed lines (26, 28) for pivoting the line parts (27, 28).

## Revendications

1. Four à arc à courant continu pour la fusion de métal, en particulier de la ferraille, comportant une carcasse de four (10) pouvant être fermée par un couvercle (14) et constituée d'une carcasse inférieure (11) revêtue de moyens réfractaires et d'une carcasse supérieure (12,13) métallique et traversée par un fluide de refroidissement, et un dispositif pour amener le courant électrique, constitué d'une électrode (24) faisant saillie dans la carcasse de four (10) à travers le couvercle (14), ainsi que d'une électrode de fond (25) agencée dans le fond (15) de la carcasse inférieure (11), les deux électrodes étant raccordées par l'intermédiaire de liaisons à une source de courant continu (21) et étant séparées magnétiquement de la charge au moins partiellement par blindage, et au moins deux amenées de courant (26,28) vers l'électrode de fond (25) étant prévues, amenées de courant qui comportent des pièces de conduction (27,29) orientées parallèlement à l'axe principal (I),
caractérisé en ce qu'entre les pièces de conduction (27,29) et la carcasse supérieure (12,13), sont prévus des boucliers (31,32) pouvant être déplacés parallèlement à la carcasse supérieure (12,13) à l'aide d'entraînements (34) reliés à eux, pour réduire le champ magnétique engendré par le courant à hauteur de l'arc électrique.

2. Four à arc à courant continu selon la revendication 1,
caractérisé en ce que les moyens (34) pour déplacer les boucliers (31,32) sont des vérins (35).

3. Four à arc à courant continu selon la revendication 2,
caractérisé en ce que les vérins (35) sont reliés à une unité de réglage (41) qui est reliée à des éléments de mesure du courant (42) et/ou de la température (43), par l'intermédiaire d'une liaison de commande (44).

4. Four à arc à courant continu selon la revendication 2,
caractérisé en ce que les entraînements (34) comportent des tiges de guidage (33), par l'intermédiaire desquelles le bouclier (31) peut être guidé parallèlement à l'axe de l'électrode (24).

5. Four à arc à courant continu selon la revendication 1,
caractérisé en ce que les entraînements (34) sont des entraînements électromécaniques (37) qui sont reliés à des rails de guidage (36), par l'intermédiaire desquels le bouclier (32) peut être déplacé horizontalement.

6. Four à arc à courant continu selon la revendication 1,
caractérisé en ce que la carcasse supérieure (12) est réalisée en cuivre à son embouchure en regard de la carcasse inférieure (11).

7. Four à arc à courant continu selon la revendication 1,
caractérisé en ce que les pièces de conduction (27,29) sont raccordées à un dispositif de pivotement (50), par lequel leur écartement réciproque peut être modifié.

8. Four à arc à courant continu selon la revendication 7,
caractérisé en ce que les articulations (51,52) sont prévues dans les conduites d'amenée (26,28) pour pivoter les pièces de conduction (27,29).
